# EUROPÄISCHE PATENTSCHRIFT

(11) **EP 1 142 750 B1**
(45) Veröffentlichungstag und Bekanntmachung des Hinweises auf die Patenterteilung: **02.07.2003**
(21) Anmeldenummer: 01107214.7
(22) Anmeldetag: 23.03.2001
(51) Int. Cl.: B60N 2/01, B60N 2/36

(54) **Sitzanordnung für Fahrzeuge**
Vehicle seat arrangement
Agencement de sièges de véhicules

(30) Priorität: 05.04.2000 DE 10017059
(43) Veröffentlichungstag der Anmeldung: 10.10.2001
(73) Patentinhaber: DaimlerChrysler AG, 70567 Stuttgart (DE)
(72) Erfinder: Carneiro de Campos, Armin, 73635 Rudersberg (DE); Mitschelen, Rolf, 73230 Kirchheim/Teck (DE)

(56) Entgegenhaltungen:
- DE-A- 3 826 959
- US-A- 2 956 837
- US-A- 4 712 824
- US-A- 4 932 709
- US-A- 5 492 386

## Beschreibung

Die Erfindung betrifft eine Sitzanordnung für Fahrzeuge gemäß dem Oberbegriff des Patentanspruchs 1.

Bei einer bekannten Sitzanordnung (US 5 492 386) sind bei allen Sitzen der zweiten und dritten Sitzreihe die Rückenlehnen an den Sitzkissen angelenkt und auf diese aufklappbar. Die Sitzkissen ihrerseits sind um eine an der vorderen Sitzkissenkante quer zur Fahrzeugslängsrichtung verlaufende Schwenkachse um 180° nach vorn schwenkbar. Während die Schwenkachse der Sitzkissen der Sitze in der dritten Sitzreihe fahrzeugfest angeordnet ist, ist die Schwenkachse für die Sitzkissen der Sitze in der zweiten Sitzreihe an jeweils einem in Längsrichtung des Fahrzeugs verschiebbaren Sitzgestell festgelegt. Zum Wegklappen der Sitze zwecks Laderaumvergrößerung werden die Sitze in der zweiten Sitzreihe nach vorn geschoben, die Rückenlehne der Sitze in der dritten Sitzreihe auf die zugehörigen Sitzkissen aufgeklappt und die Sitzpakete aus Sitzkissen und Rückenlehne um die fahrzeugfeste Schwenkachse um 180° nach vorn geschwenkt, wobei die Rückseite der Rückenlehnen auf dem tiefergelegenen Fußraumboden zu liegen kommen. Soll der Laderaum weiter vergrößert werden, so werden die Sitze der zweiten Sitzreihe wieder zurückgeschoben, wobei die Sitzgestelle an den im Fußraum einliegenden Sitzpaketen der dritten Sitzreihe vorbeigleiten, die Rückenlehen der Sitze der zweiten Sitzreihe auf die Sitzkissen geklappt und die so entstandenen Pakete aus Sitzkissen und Rückenlehnen um die sitzgestellfeste Schwenkachse um 180° nach vorn geschwenkt, so daß nunmehr eine Fluchtlinie gebildet ist, die sich von dem hinteren Laderaum über die Unterseite der Sitzkissen der Sitze aus der dritten Sitzreihe und der zweiten Sitzreihe bis hin zu den Rückenlehnen der Sitze in der ersten Sitzreihe erstreckt.

Bei einer ebenfalls bekannten Sitzanordnung der eingangs genannten Art (US 4 932 709) sind wiederum bei allen Sitzen der zweiten und dritten Sitzreihe die Rückenlehnen an den Sitzkissen angelenkt und auf diese aufklappbar. Zusätzlich sind die Sitzkissen der Sitze in der dritten Sitzreihe um eine quer zur Fahrzeuglängsrichtung sich erstreckende fahrzeugfeste Schwenkachse um 180° nach vorn schwenkbar. Sind die Sitze in der zweiten und dritten Sitzreihe zwecks Laderaumvergrößerung abgeklappt, so bilden die Rückseiten der Rückenlehne der Sitze in der zweiten Sitzreihe und die Unterseite der Sitzkissen der Sitze in der dritten Sitzreihe mit dem gegenüber dem Fußraum erhöhten Laderaumboden im Heck des Fahrzeugs eine durchgehend ebene Ladefläche. Um eine solche Ladefläche zu realisieren, müssen die Rückseiten der Rückenlehne der Sitze in der zweiten Sitzreihe eben ausgebildeter sein, so daß für eine designerische Gestaltung der Rückseiten der Rückenlehne zwecks Verbesserung des optischen Erscheinungsbildes für die auf den Sitzen in der dritten Sitzreihe plazierten Insassen kein Raum gegeben ist.

Der Erfindung liegt die Aufgabe zugrunde, bei einer Sitzanordnung der eingangs genannten Art zum Zwecke der Laderaumvergrößerung eine ebene Ladefläche durch Wegklappen der Sitze der zweiten und dritten Sitzreihe zu realisieren, ohne der designerischen Gestaltung der Rückseiten der Rückenlehnen der Sitze in der zweiten Sitzreihe technischen Zwängen, wie sie von einer ebenen Ladefläche gefordert werden, zu unterwerfen.

Die Aufgabe ist erfindungsgemäß durch die Merkmale des Patentanspruchs 1 gelöst.

Die erfindungsgemäße Sitzanordnung hat den Vorteil, daß nach Wegklappen der Sitze in der zweiten und dritten Sitzreihe von den Sitzkissen der Sitze aus der dritten Sitzreihe ebene Platten abgezogen und auf die oben liegende Rückseite der Rückenlehnen der Sitze aus der zweiten Sitzreihe aufgelegt werden. Damit ist die Ladefläche unabhängig von der designerischen Gestaltung der Rückenlehne immer eben und auch Zwischenräume zwischen den Rückenlehnen können geschlossen werden, so daß Ladegut dort nicht hineinfallen kann. Außerdem werden die nach ästhetischen Gesichtpunkten gestalteten Rückseiten der Rückenlehnen der Sitze aus der zweiten Sitzreihe geschützt, so daß sie vom Ladegut nicht beschädigt werden können, was das optisch gute Erscheinungsbild der Rückenlehne für die Passagiere in der dritten Sitzreihe langfristig erhält.

Vorteilhafte Ausführungsformen der erfindungsgemäßen Sitzanordnung mit zweckmäßigen Weiterbildungen und Ausgestaltungen der Erfindung sind in den weiteren Patentansprüchen angegeben.

Gemäß vorteilhaften Ausführungsformen der Erfindung sind die an der Unterseite der Sitzkissen der Sitze in der dritten Sitzreihe angeordneten Platten um eine an der hinteren Sitzkissenkante festgelegte, zur Fahrzeuglängsrichtung quer verlaufende Schwenkachse um 180° schwenkbar gehalten oder an der Unterseite der Sitzkissen längsverschiebbar geführt und über die hintere Sitzkissenkante auf die Rückseite der Rückenlehne vorschiebbar ausgebildet.

Sind die Sitzkissen der Sitze in der dritten Sitzreihe zu einer durchgehenden Sitzbank zusammengefaßt, so werden gemäß einer bevorzugten Ausführungsform der Erfindung die den Sitzkissen zugeordneten Platten zu einem die Unterseite der Sitzbank überdeckenden, einstückigen Ladeboden zusammengefaßt, der die umgeklappten Rückenlehnen der Sitze in der zweiten Sitzreihe vollständig zu überdecken vermag.

Die Erfindung ist anhand von in der Zeichnung dargestellten Ausführungsbeispielen im folgenden näher beschrieben. Es zeigen in prinzipieller Darstellung:
- Fig. 1: eine Sitzanordnung für ein Fahrzeug mit drei Sitzreihen, die jeweils zwei nebeneinander angeordnete Einzelsitze aufweisen,
- Fig. 2: eine gleiche Darstellung wie in Fig. 2 mit zur Laderaumvergrößerung weggeklappten Sitzen der zweiten und dritten Sitzreihe,
- Fig. 3: eine gleiche Darstellung wie in Fig. 2 mit auf den Rückenlehnen der Sitze in der zweiten Sitzreihe aufgelegten Platten zur Erzeugung eines ebenen Laderaumbodens,
- Fig. 4: jeweils eine Seitenansicht eines umgeklappten
- Fig. 5: Sitzkissens eines Sitzes der zweiten Sitzreihe gemäß einem zweiten und dritten Ausführungsbeispiel.

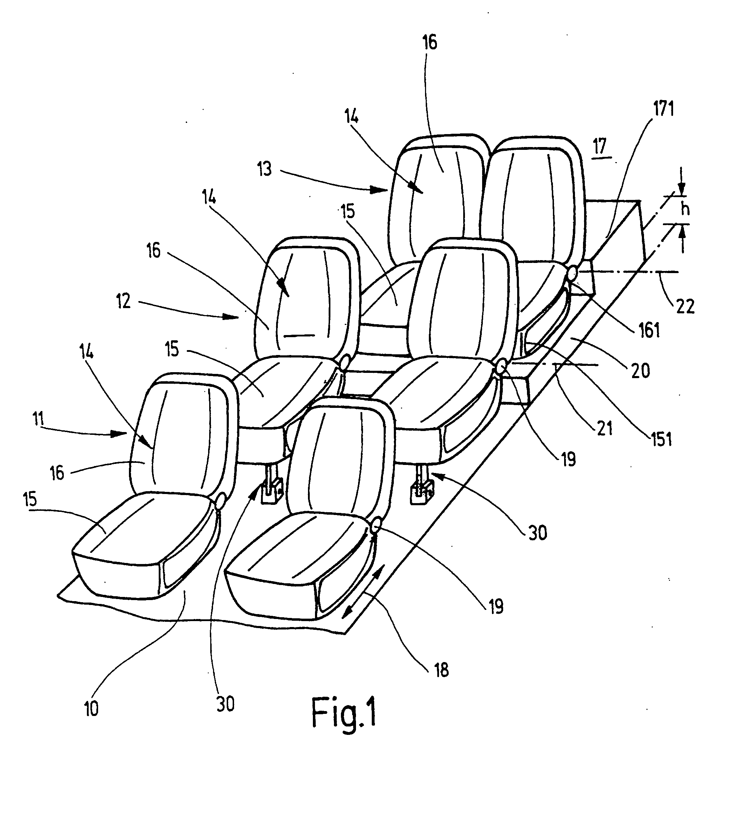

Die in Fig. 1 perspektivisch dargestellte Sitzanordnung für ein Fahrzeug weist drei hintereinander angeordnete Sitzreihen 11, 12 und 13 auf. Jede Sitzreihe besteht aus zwei nebeneinander angeordneten einzelnen Sitzen 14, wobei wiederum jeder Sitz 14 ein Sitzkissen 15 mit Sitzrahmen und darin aufgenommenem Sitzpolster und eine Rückenlehne 16 aufweist. Auf die Darstellung der üblicherweise an den Rückenlehnen 16 angeordneten Kopfstützen ist hier der Übersichtlichkeit halber verzichtet worden. Hinter der dritten Sitzreihe ist noch ein minimaler Laderaum 17 mit einem gegenüber dem Fußraumboden erhöhten Laderaumboden 171 vorgesehen. Die Sitze 14 in der ersten Sitzreihe 11, die Fahrer- und Beifahrersitz darstellen, und ggf. die Sitze 14 in der zweiten Sitzreihe 12 sind auf dem Fahrzeugboden 10 in Fahrzeuglängsrichtung verschiebbar befestigt und in jeder Verschiebeposition am Fahrzeugboden arretierbar. Die Längsverschiebbarkeit der Sitze 14 in der ersten Sitzreihe 11 ist durch Doppelpfeile 18 symbolisiert. Bei den Sitzen 14 in der zweiten Sitzreihe 12 sind die Rückenlehnen 16 über Gelenkbeschläge 19 an den Sitzkissen 15 angelenkt, so daß die Rückenlehnen 16 mit ihrer vorderen Lehnenfläche auf die Polsteroberfläche der Sitzkissen 15 aufgeklappt werden können. Die Rückseiten der Rückenlehnen 16, die sog. Lehenrücken, der Sitze 14 in der ersten und zweiten Sitzreihe 11, 12 sind nach ästhetischen Gesichtspunkten gestaltet, hier leicht gewölbt, und mit Einstecktaschen 29 versehen. Die Rückseiten der Rückenlehnen 16 in der dritten Sitzreihe 13 sind durchgehend flach und eben ausgeführt.

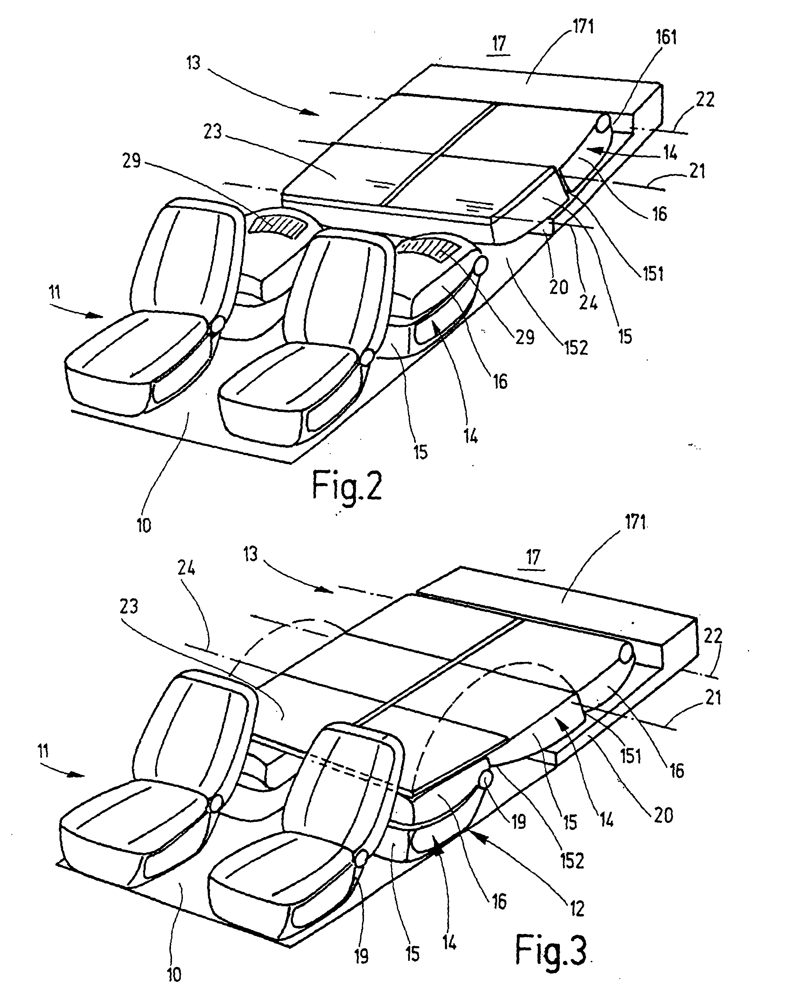

Die Sitze 14 in der zweiten Sitzreihe 12 können, nachdem die Rückenlehnen 16 auf die Sitzkissen 15 aufgeklappt sind, mittels einer in Fig. 1 schematisch angedeuteten parallelogrammartigen Kinematik 30 gleichzeitig nach vorn geschoben und auf den Fahrzeugboden 10 abgesenkt werden. Die Sitzkissen 15 der Sitze 14 in der dritten Sitzreihe 13 sind auf einem Podest 20 aufgenommen. Die Höhe h des Podestes 20 gegenüber dem Fahrzeugboden 10 ist so bemessen, daß die Polsteroberfläche der Sitzkissen 15 der Sitze 14 in der dritten Sitzreihe 13 in etwa mit der Rückseite der Rückenlehne 16 der Sitze 14 in der zweiten Sitzreihe fluchtet, wenn diese Rückenlehnen 16 auf die Sitzkissen 15 der Sitze 14 in der zweiten Sitzreihe 12 aufgeklappt und die Sitzpakete wie beschrieben abgesenkt sind (Fig. 2 und 3). Die Sitzkissen 15 der Sitze 14 in der dritten Sitzreihe 13 sind um eine an der vorderen Sitzkissenkante 151 angeordnete Schwenkachse 21 um ca. 180° und die Rückenlehnen 16 der Sitze 14 in der dritten Sitzreihe 13 um eine nahe der unteren Lehnenkante 161 angeordnete Schwenkachse 22 um mindestens 90° nach vorn schwenkbar. Beide Schwenkachsen 21, 22 verlaufen quer zur Fahrzeuglängsrichtung und sind fahrzeugseitig festgelegt. Der Laderaumboden 171 ist gegenüber dem Podest 20 um die Tiefe der Rückenlehne 16 erhöht, damit nach Abklappen der Rückenlehne 16 deren Rückseite mit dem Laderaumboden 171 fluchtet. Der Laderaum 17 kann aber auch so ausgeführt werden, daß der Laderaumboden 171 mit der Oberfläche des Podestes 20 fluchtet.

Wie aus Fig. 2 ersichtlich ist, ist auf der Unterseite der Sitzkissen 15 der Sitze 14 in der dritten Sitzreihe jeweils eine flache Platte 23 angeordnet. In dem Ausführungsbeispiel der Fig. 2 und 3 ist die flache Platte 23 um eine an der hinteren Sitzkissenkante 152 am Sitzkissen 15 festgelegte, quer zur Fahrzeuglängsrichtung verlaufende Schwenkachse 24 um mindestens 180° schwenkbar gehalten. Diese Platte 23 ist an der Unterseite der Sitzkissen 15 so verriegelt, daß sie in der Gebrauchsstellung der Sitze 14 nicht abschwenken kann. Die Verriegelungsvorrichtung ist in Fig. 2 nicht dargestellt.

Werden nunmehr zum Zwecke der Laderaumvergrößerung die Sitze 14 der zweiten und dritten Sitzreihe 12, 13 weggeklappt, so werden zunächst die Rückenlehnen 16 der Sitze 14 in der zweiten Sitzreihe 12 auf die zugeordneten Sitzkissen 15 aufgeklappt und die von Sitzkissen 15 und aufgeklappter Rückenlehne 16 gebildeten Sitzpakete mittels der parallelogrammartigen Kinematik 30 nach vorn und gleichzeitig nach unten zum Fahrzeugboden 10 geschwenkt, so daß zwischen den Sitzen 14 der zweiten Sitzreihe 12 und dem Podest 20 Freiraum zum Einschwenken der Sitzkissen 15 der Sitze 14 in der dritten Sitzreihe 13 geschaffen ist. Nunmehr werden die Sitzkissen 15 der Sitze 14 in der dritten Sitzreihe 13 um ihre Schwenkachse 21 um ca. 180° nach vorn und die Rückenlehnen 16 um ihre Schenkachse 22 um ca. 90° nach vorn in den von den Sitzkissen 15 freigegebenen Raum auf und vor dem Podest 20 geschwenkt (Fig. 2). Die an der Unterseite der Sitzkissen 15 gehaltenen Platten 23 liegen nunmehr oben und werden um ihre Schwenkachse 24 nach vorn auf die Rückseite der Rückenlehnen 16 der Sitze 14 der zweiten Sitzreihe 12 umgeklappt, wie dies in Fig. 3 skizziert ist. Damit ist unabhängig von der gewölbten Ausführung der Rückseite der Rückenlehnen 16 der Sitze 14 in der zweiten Sitzreihe 12 eine ebene Ladefläche realisiert, die von dem Laderaumboden 171 bis an die Rückenlehnen 16 der Sitze 14 in der ersten Sitzreihe 11 reicht und auch den relativ großen Abstand zwischen den beiden Rückenlehnen 16 der abgeklappten Sitze 14 der zweiten Sitzreihe 12 schließt.

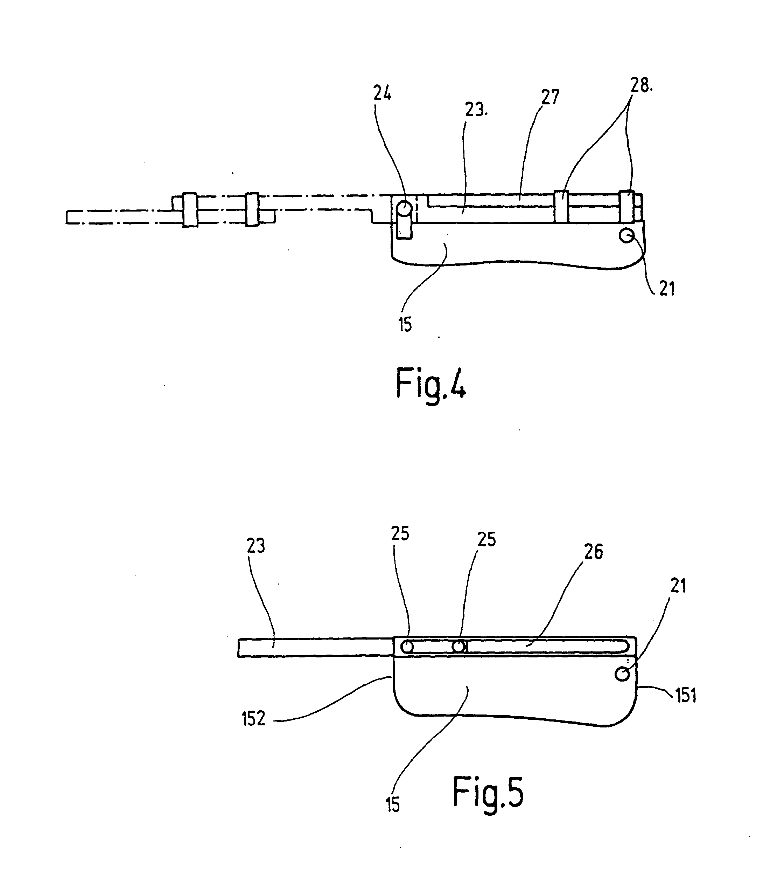

In dem in Fig. 5 schematisch dargestellten Ausführungsbeispiel eines Sitzkissens 15 eines Sitzes 14 in der dritten Sitzreihe 13 ist die Platte 23 nicht schwenkbar sondern über die hintere Sitzkissenkante 152 hinaus verschiebbar an der Unterseite des Sitzkissens 15 gehalten. Hierzu ist die Platte 23 mit seitlich abstehenden Führungsstiften 25 in zwei einander am Sitzkissen 15 gegenüberliegenden Führungsschienen 26 axial verschieblich geführt. Sind die Sitze 14 in der vorstehend beschriebenen Weise umgeklappt, so wird die Platte 23 über die Rückseite der Rückenlehnen 16 des Vordersitzes 14 in der zweiten Sitzreihe 12 geschoben.

Bei dem in Fig. 4 schematisch skizzierten Sitzkissen 15 eines Sitzes 14 in der dritten Sitzreihe 13 ist die Platte 23 wiederum schwenkbar an der Unterseite des Sitzkissens 15 gehalten. Die nahe der hinteren Sitzkissenkante 152 angeordnete Schwenkachse der Platte 23 ist wiederum mit 24 gekennzeichnet. Die um 180° nach vorn geschwenkte Position der Platte 23 ist in Fig. 4 strichpunktiert eingezeichnet. An der Platte 23 ist noch eine Ausziehplatte 27 verschieblich gehalten, die innerhalb der Plattenkontur der Platte 23 aufgenommen ist und relativ zur Platte 23 in Fahrzeuglängsrichtung teleskopartig ausziehbar ist. Führungsglieder, die die Ausziehplatte 27 an der Platte 23 verschieblich halten, sind mit 28 angedeutet. Mittels der teleskopartig ausziehbaren Ausziehplatte 27 können unabhängig von der an der Unterseite des Sitzkissens 15 zur Aufnahme der Platte 23 zur Verfügung stehenden Fläche größere Ladeflächenbereiche abgedeckt werden, z. B. dann wenn die Sitzkissenfläche 15 kleiner ist als die Fläche der Rückseite der Rückenlehne 16 des Vordersitzes 14 in der zweiten Sitzreihe 12.

Die Ausziehplatte 27 kann an der Platte 23 auch so angeordnet werden, daß sie quer zur Längsrichtung des Fahrzeugs ausziehbar ist. Dies ist dann von Vorteil, wenn die Fläche des Sitzkissens 15 zur Aufnahme von Platte 23 und Ausziehplatte 27 weniger breit ist als die Rückenlehne 16 des Vordersitzes 14 in der zweiten Sitzreihe 12. Die im umgeklappten Zustand der Sitze 14 nach Umlegen der Platte 23 quer ausgeschobene Ausziehplatte 27 überdeckt dann zusammen mit der Platte 23 vollständig die Rückseite der umgeklappten Rückenlehne 16 in der zweiten Sitzreihe 12.

In bestimmten Anwendungsfällen sind die Sitzkissen 15 der Sitze 14 in der dritten Sitzreihe 13 zu einer einheitlichen Sitzbank zusammengefaßt. In diesem Fall werden die den Sitzkissen 15 zugeordeten Platten 23 zu einem die Unterseite der Sitzbank überdeckenden, einstückigen Ladeboden zusammengefaßt. Ein solcher Ladeboden wird dann wiederum auf die Rückseite der umgeklappten Rückenlehnen 16 in der zweiten Sitzreihe 12 aufgeklappt oder über diese Rückenlehne 16 hinweggeschoben. Eine zusätzliche einheitliche Ausziehplatte 27 kann ebenfalls an dem einstückigen Ladeboden vorgesehen werden.

## Patentansprüche

1. Sitzanordnung für Fahrzeuge mit drei hintereinander angeordneten, aus mindestens zwei nebeneinander liegenden, jeweils eine Rückenlehne (16) und ein Sitzkissen (15) aufweisenden Sitzen (14) zusammengesetzen Sitzreihen (11, 12, 13), bei der zur Laderaumvergrößerung die Sitze (14) der beiden hinteren Sitzreihen (12, 13) klappbar sind und hierzu die an den Sitzkissen (15) angelenkten Rückenlehnen (16) der Sitze (14) in der zweiten Sitzreihe (12) auf die zugehörigen Sitzkissen (15) aufklappbar und die Sitzkissen (15) in Längsrichtung vorverlagerbar, sowie die Sitzkissen (15) der Sitze (14) in der dritten Sitzreihe (13) um eine fahrzeugfeste, quer zur Längsrichtung des Fahrzeugs, nahe der vorderen Sitzkissenkante (152) verlaufende Schwenkachse (21) um ca. 180° schwenkbar sind, **dadurch gekennzeichnet, daß** die Rückenlehnen (16) der Sitze (14) in der dritten Sitzreihe (13) um eine quer zur Fahrzeuglängsrichtung nahe der Lehnenunterkante (161) verlaufende, fahrzeugfeste Schwenkachse (22) um mindestens 90° nach vorn schwenkbar sind und daß an der Unterseite der Sitzkissen (15) der Sitze (14) in der dritten Sitzreihe (13) eine flache Platte (23) so angeordnet ist, daß sie bei nach vorn geschwenktem Sitzkissen (15) auf die Rückseite der abgeklappten Rückenlehne (16) des vorverlagerten Vordersitzes (14) in der zweiten Sitzreihe (12) auflegbar ist.

2. Sitzanordnung nach Anspruch 1, **dadurch gekennzeichnet, daß** die Sitze (14) in der zweiten Sitzreihe (12), vorzugsweise mittels einer parallelogrammartigen Kinematik (30), absenkbar so ausgebildet sind, daß nach Aufklappen der Rückenlehnen (16) auf die Sitzkissen (15) die Rückseiten der Rückenlehnen (16) auf dem Niveau der Unterseiten der nach vorn geklappten Sitzkissen (15) der Sitze (14) in der dritten Sitzreihe (13) liegen.

3. Sitzanordnung nach Anspruch 2, **dadurch gekennzeichnet, daß** die Sitze (14) der letzten Sitzreihe (13) gegenüber den abgesenkten Sitzen (14) der zweiten Sitzreihe (12) erhöht plaziert sind und daß die Erhöhung so vorgenommen ist, daß die Sitzkissenoberfläche der Sitze (14) in der dritten Sitzreihe (13) mit der Oberfläche des Lehnenrückens der auf das zugeordnete Sitzkissen (15) abgeklappten Rückenlehne (16) des Sitzes (14) in der zweiten Sitzreihe (12) in etwa fluchtet.

4. Sitzanordnung nach einem der Ansprüche 1 - 3, **dadurch gekennzeichnet, daß** die Platte (23) um eine an der hinteren Sitzkissenkante (152) festgelegte, quer zur Fahrzeuglängsrichtung verlaufende Schwenkachse (24) um 180° schwenkbar gehalten ist.

5. Sitzanordnung nach einem der Ansprüche 1 - 3, **dadurch gekennzeichnet, daß** die Platte (23) an der Unterseite des Sitzkissens (15) längsverschiebbar geführt und über die hintere Sitzkissenkante (152) vorschiebbar ist.

6. Sitzanordnung nach einem der Ansprüche 1 - 5, **dadurch gekennzeichnet, daß** an der Platte (23) eine Ausziehplatte (27) verschiebbar gehalten ist, die innerhalb der Plattenkontur der Platte (23) aufgenommen und relativ zur Platte (23) in oder quer zur Fahrzeuglängsrichtung teleskopartig ausschiebbar ist.

7. Sitzanordnung nach einem der Anspürche 1 - 6, **dadurch gekennzeichnet, daß** die Sitzkissen (15) der Sitze (14) in der dritten Sitzreihe (13) zu einer Sitzbank und die den Sitzkissen (15) zugeordneten Platten (23) zu einem die Unterseite der Sitzbank überdeckenden, einstückigen Ladenboden zusammengefaßt sind.

## Claims

1. Seating arrangement for motor vehicles with three rows of seats (11, 12, 13) arranged one behind the other, each having at least two seats (14) disposed adjacent to one another and consisting of a backrest (16) and a seat cushion (15), in which the seats (14) of the two rear rows of seats (12, 13) can be folded in order to make more stowage space available and to this end the backrests (16) of the seats (14) of the second row of seats (12) hinge-mounted on the seat cushions (15) can be folded down onto the associated seat cushions (15) and the seat cushions (15) pushed forwards in the longitudinal direction; whilst the seat cushions (15) of the seats (14) in the third row of seats (13) can be pivoted by approximately 180° about a pivot axis (21) fixed to the vehicle close to the front seat cushion edge (152) extending transversely to the longitudinal direction of the vehicle, **characterised in that** the backrests (16) of the seats (14) in the third row of seats (13) can be pivoted forwards by at least 90° about a pivot axis (22) extending transversely to the vehicle longitudinal direction close to the backrest bottom edge (161) fixed to the vehicle, and a flat board (23) is disposed on the underside of the seat cushion (15) of the seats (14) in the third row of seats (13) so that, when the seat cushions (15) are pivoted forwards, it can be placed on the rear face of the folded backrest (16) of the previously folded seat ahead (14) in the second row of seats (12).

2. Seating arrangement as claimed in claim 1,
**characterised in that** the seats (14) in the second row of seats (12) are preferably designed so that they can be lowered by means of a parallelogram-type kinematic mechanism (30) and when the backrests (16) have been folded down onto the seat cushions (15), the rear faces of the backrests (16) sit on a level with the undersides of the forwardly folded seat cushions (15) of the seats (14) in the third row of seats (13).

3. Seating arrangement as claimed in claim 2, **characterised in that** the seats (14) of the last row of seats (13) are disposed at a higher level than the lowered seats (14) of the second row of seats (12) and the additional height is such that the seat cushion surface of the seats (14) in the third row of seats (13) is substantially flush with the surface of the backrest when the backrest (16) of the seat (14) in the second row of seats (12) is folded down onto the associated seat cushion (15).

4. Seating arrangement as claimed in one of claims 1 to 3, **characterised in that** the board (23) is retained so that it can be pivoted by 180° about a fixed pivot axis (24) on the rearward seat cushion edge (151) extending transversely to the vehicle longitudinal direction.

5. Seating arrangement as claimed in one of claims 1 to 3, **characterised in that** the board (23) is guided on the underside of the seat cushion (15) in a longitudinal sliding action and can be displaced forwards over the rearward seat cushion edge (152).

6. Seating arrangement as claimed in one of claims 1 to 5, **characterised in that** a pull-out board (27) is slidably retained on the board (23), which fits within the board contour of the board (23) and can be telescopically extended relative to the board (23) in or transversely to the vehicle longitudinal direction.

7. Seating arrangement as claimed in one of claims 1 to 6, **characterised in that** the seat cushion (15) of the seats (14) in the third row of seats (13) fit together to form a seat bench and the boards (23) assigned to the seat cushions (15) fit together to form an integral stowage floor covering the underside of the seat bench.

## Revendications

1. Dispositif de sièges pour véhicules avec trois rangées de sièges (11, 12, 13) disposées les unes derrière les autres, composées d'au moins deux sièges (14) disposés côte à côte, ayant chacun un dossier (16) et un coussin d'assise (15), sachant que pour agrandir le coffre à bagages les sièges (14) des deux dernières rangées de sièges (12, 13) peuvent être repliés et qu'à cette fin les dossiers (16) articulés au niveau des coussins d'assise (15) des sièges (14) de la deuxième rangée de sièges (12) peuvent être repliés sur les coussins d'assise (15) correspondants et les coussins d'assise (15) être déplacés vers l'avant dans le sens de la longueur, de même que les coussins d'assise (15) des sièges (14) de la troisième rangée de sièges (13) peuvent être pivotés d'environ 180° autour d'un axe de pivotement (21) fixe par rapport au véhicule et qui s'étend transversalement au sens de la longueur du véhicule, près du bord avant du coussin d'assise (152), **caractérisé en ce que** les dossiers (16) des sièges (14) de la troisième rangée de sièges (13) peuvent être pivotés vers l'avant d'au moins 90° autour d'un axe de pivotement (22) fixe par rapport au véhicule et qui s'étend transversalement par rapport au sens de la longueur du véhicule près du bord inférieur du dossier (161), et qu'une plaque plate (23) est disposée au niveau de la face inférieure des coussins d'assise (15) des sièges (14) de la troisième rangée de sièges (13) de façon à pouvoir être posée sur la face arrière du dossier (16) rabattu du siège avant (14) déplacé vers l'avant dans la deuxième rangée de sièges (12) lorsque le coussin d'assise (15) est pivoté vers l'avant.

2. Dispositif de sièges selon la revendication 1, **caractérisé en ce que** les sièges (14) de la deuxième rangée de sièges (12) sont conçus abaissables de préférence à l'aide d'une cinématique en parallélogramme (30) de sorte que, après avoir rabattu les dossiers (16) sur les coussins d'assise (15), les faces arrière des dossiers (16) se trouvent au niveau des faces inférieures des coussins d'assises (15) repliés vers l'avant des sièges (14) de la troisième rangée de sièges (13).

3. Dispositif de sièges selon la revendication 2, **caractérisé en ce que** les sièges (14) de la dernière rangée de sièges (13) sont surélevés par rapport aux sièges (14) abaissés de la deuxième rangée de sièges (12), et que la surélévation est faite de telle sorte que la surface des coussins d'assise des sièges (14) de la troisième rangée de sièges (13) s'aligne approximativement avec la surface de l'arrière du dossier (16) du siège (14) de la deuxième rangée de sièges (12) rabattu sur le coussin d'assise (15) correspondant.

4. Dispositif de sièges selon l'une quelconque des revendications 1 à 3, **caractérisé en ce que** la plaque (23) est maintenue de façon à pouvoir pivoter de 180° autour d'un axe de pivotement (24) fixé au niveau du bord arrière du coussin d'assise (152), est s'étendant transversalement au sens de la longueur du véhicule.

5. Dispositif de sièges selon l'une quelconque des revendications 1 à 3, **caractérisé en ce que** la plaque (23) de la face inférieure du coussin (15) peut être déplacée de façon fluide dans le sens de la longueur et être déplacée vers l'avant par-dessus le bord arrière du coussin d'assise (152).

6. Dispositif de sièges selon l'une quelconque des revendications 1 à 5, **caractérisé en ce qu'**une plaque extractible (27) est maintenue au niveau de la plaque (23) de sorte à pouvoir se déplacer en translation, laquelle plaque extractible ne dépasse pas le contour de la plaque (23) et peut être extraite de manière télescopique par rapport à la plaque (23) dans le sens de la longueur du véhicule ou transversalement par rapport au sens de la longueur du véhicule.

7. Dispositif de sièges selon l'une quelconque des revendications 1 à 6, **caractérisé en ce que** les coussins d'assise (15) des sièges (14) de la troisième rangée de sièges (13) sont assemblés pour former une banquette et que les plaques (23) affectées aux coussins d'assise (15) sont assemblées de sorte à former un plan de chargement d'une seule pièce recouvrant la face inférieure de la banquette.
